# EUROPÄISCHE PATENTSCHRIFT

(11) **EP 3 943 720 B1**
(45) Veröffentlichungstag und Bekanntmachung des Hinweises auf die Patenterteilung: **04.01.2023**
(21) Anmeldenummer: 20187487.2
(22) Anmeldetag: 23.07.2020
(51) Int. Cl.: F01N 3/20, F01N 3/28, F01N 13/18, F01N 3/027

(54) **ELEKTRISCHE HEIZVORRICHTUNG**
ELECTRIC HEATING APPARATUS
DISPOSITIF DE CHAUFFAGE ÉLECTRIQUE

(43) Veröffentlichungstag der Anmeldung: 26.01.2022
(73) Patentinhaber: Benteler Automobiltechnik GmbH, 33102 Paderborn (DE)
(72) Erfinder: PADBERG, Paul, 59757 Arnsberg (DE); PRZYBYLSKI, Sven, 33104 Paderborn (DE); RUSCHE, Ulrich, 59457 Werl (DE)
(74) Vertreter: Griepenstroh, Jörg

(56) Entgegenhaltungen:
- DE-A1- 4 307 431
- DE-U1- 8 916 129
- US-A- 4 976 929
- US-A- 5 410 875
- US-A1- 2017 273 146

## Beschreibung

Die vorliegende Erfindung betrifft eine elektrische Heizvorrichtung für einen Abgasstrang gemäß den Merkmalen im Oberbegriff von Anspruch 1.

Um der Gesetzgebung und Markt- bzw. Kundenerwartungen zu entsprechen, werden Verbrennungsmotoren heutzutage auf höchste Effizienz getrimmt und produzieren so wenig Abwärme wie möglich.

Im Widerspruch dazu steht eine schnelle Aufheizung der Abgaskomponenten nach dem Kaltstart und das Halten dieses Temperaturbereichs während den gängigen Testzyklen, um optimale Reaktionsbedingungen für die Umsetzung von schädlichen Abgasbestandteilen in nicht schädliche Elemente zu gewährleisten.

Dieser Light-Off beginnt bei Katalysatoren ab ca. 180°C, die Reaktionsgeschwindigkeit steigt mit der Temperatur. Da kommende Zulassungsbeschränkungen die Abgaszusammensetzung direkt nach Kaltstart beurteilen, sollte die Light-Off Temperatur schnellstmöglich erreicht werden.

Hierzu werden Heizelemente eingesetzt, welche ein aktives Thermomanagement der Abgasanlage innerhalb gewisser Grenzen erlauben. Diese sind aktuell meist aus Dünnblechwabenstrukturen (Finnenstrukturen) spiralförmig gewickelt. Die Trennung der Leiter (Wabenstränge) wird durch einen Luftspalt sichergestellt. Durch Hochtemperaturlöten wird der Gesamtaufbau versteift. Die elektrische Isolierung der gesamten Heizmatrix erfolgt meistens über Keramikstifte (Support-Pins), wobei diese in den Katalysatorkörper eingeschoben werden.

Eine solche Heizvorrichtung ist beispielsweise aus der EP 2 802 752 B1 bekannt. Ferner ist aus der US 2017 /0273146 A1 eine Heizvorrichtung für ein Abgaswärmtauscher bekannt, bei welcher Lamellenreihen von Haltestäben durchgriffen sind.

Aufgabe der vorliegenden Erfindung ist es, ausgehend vom Stand der Technik eine Heizvorrichtung für einen Abgasstrang aufzuzeigen, welche kostengünstig und einfach produzierbar ist, gleichzeitig jedoch eine hohe effektive Heizleistung bereitstellt, um zukünftigen Anforderungen an eine kurzfristige externe Aufheizung des Abgasstromes erfüllen zu können sowie optional gestalterische Freiheitsgrade in der Anordnung der Abgaskomponenten untereinander zu geben.

Die zuvor genannte Aufgabe wird mit einer elektrischen Heizvorrichtung in einem Abgasstrang mit den Merkmalen des Anspruches 1 gelöst.

Vorteilhafte Ausgestaltungsvarianten sind in den abhängigen Ansprüchen beschrieben.

Die elektrische Heizvorrichtung in einem Abgasstrang kann auch als Abgasstrangheizvorrichtung, alternativ auch als Katalysatorheizvorrichtung bezeichnet werden. Sie weist ein außen umlaufendes, insbesondere rundes Gehäuse auf. Das Gehäuse ist insbesondere ein radial rund umlaufendes Blechgehäuse, welches insbesondere einen äußeren Mantel aufweist. Diese kann dann in einen Abgasstrang integriert werden, insbesondere einer Abgasnachbehandlungskomponente, beispielsweise einem Katalysator in Abgasströmungsrichtung vorgeschaltet werden.

In dem Gehäuse selbst ist eine Lamellenstruktur angeordnet. Diese Lamellenstruktur ist elektrisch erwärmbar, also als Widerstandserwärmung ausgebildet. Mithin kann durch Beaufschlagung mit einem elektrischen Strom die Lamellenstruktur erwärmt werden. Somit kann die Lamellenstruktur bzw. die Bleche oder das Blech, durch welche die Lamellenstruktur ausgebildet sind, auch als Heizleiter bezeichnet werden.

Im Rahmen der Erfindung sind grundsätzlich drei verschiedene Aufbauvarianten der Lamallenstruktur möglich.

Eine erste Variante sieht vor, dass das Lamellenblech einstückig und werkstoffeinheitlich ausgebildet ist. Bevorzugt ist das Lamellenblech zwar einstückig und werkstoffeinheitlich, jedoch nochmals unterteilt in Trägerblech und Finnenblech. Diese sind, wie gesagt, einstückig und werkstoffeinheitlich ausgebildet und erwärmen sich aufgrund elektrischer Widerstandserwärmung bei Beaufschlagung mit einem Strom zusammen.

Eine zweite Variante sieht vor, dass das Finnenblech und das Trägerblech separat hergestellt sind und diese bevorzugt miteinander gekoppelt sind, insbesondere stoffschlüssig, beispielsweise durch Löten oder Punktschweißen. Bei einer Beaufschlagung mit einem Strom werden sowohl Finnenblech als auch Trägerblech von dem Strom durchflossen und erwärmen sich beide durch die Strombeaufschlagung.

Eine dritte Variante sieht vor, dass die Lamellenstruktur zweiteilig hergestellt ist durch ein Finnenblech und ein Trägerblech. Diese sind bevorzugt wiederum miteinander gekoppelt. Bei Beaufschlagung mit einem Strom wird jedoch nur das Trägerblech durch den Strom durchflossen und erwärmt sich aufgrund von Widerstandserwärmung. Das mit dem Trägerblech gekoppelte Finnenblech erwärmt sich aufgrund von Wärmeleitung, insbesondere über die Anlage bzw. Koppelstellen.

Allen Varianten zugleich ist, dass durch das vorbeiströmende Abgas dann aufgrund von Konvektion die Wärme der Lamellenstruktur an das Abgas abgegeben wird.

Es sind elektrische Anschlüsse vorgesehen. Die elektrischen Anschlüsse durchgreifen dabei insbesondere das äußere Gehäuse, so dass sie mit entsprechend elektrischen Verbindungen außerhalb des Gehäuses gekoppelt werden können.

Das Gehäuse und die Lamellenstruktur selbst sind aus einem Stahlwerkstoff hergestellt. Insbesondere ist dieser Stahlwerkstoff den auftretenden Abgastemperaturen von bis zu 1000°C oder mehr, thermisch ressistiv gegenüber. Die Lamellenstruktur ist aus einem elektrisch leitfähigem Stahlwerkstoff ausgebildet, der einen entsprechenden ohmschen Widerstand aufweist, so dass bei Beaufschlagung mit einem elektrischen Strom sich die Lamellenstruktur erwärmt und an das vorbeiströmende Abgas aufgrund der auftretenden Konvektion die Wärme übertragen wird. In Strömungsrichtung abwärts geschaltet, ist dann die Abgasnachbehandlungskomponente, auf welche das dadurch erwärmte Abgas trifft.

Erfindungsgemäß sind in der Lamellenstruktur nunmehr Lamellenreihen angeordnet. Diese Lamellenreihen sind örtlich zueinander parallel angeordnet. Die örtlich parallel angeordneten Lamellenreihen sind elektrisch in Reihe oder parallel geschaltet. Die Lamellenreihen sind geradlinig ausgebildet.

Erfindungsgemäß ist es durch parallel zueinander angeordnete Lamellenreihen möglich, diese zunächst separat herzustellen und dann in das Gehäuse einzusetzen.

Die einzelnen Lamellenreihen und die Lamellen auf der Lamellenreihe können auch als Finnen bzw. Heizfinnen bezeichnet werden. Dadurch, dass die örtlich parallel zueinander angeordneten Lamellenreihen dann elektrisch parallel bzw. bevorzugt in Reihe zueinander geschaltet sind, erfolgt ein derart optimaler Stromdurchfluss, dass sich die Lamellenreihen gleichmäßig aufheizen und somit eine entsprechend gleichmäßige Wärmeweitergabe an die nachgeschalte Abgasnachbehandlungskomponente erfolgt.

Damit die Lamellenreihen selbst örtlich parallel zueinander angeordnet werden können, können diese zunächst separat bzw. getrennt von dem Gehäuse produziert werden. Dies erfolgt entweder für eine Lamellenreihe einstückig und werkstoffeinheitlich. Bevorzugt können jedoch ein Trägerblech bzw. ein Stromleiterblech ausgebildet sein. Auf dem Stromleiterblech selbst ist dann eine Lamellenlage bzw. auch Finnenlage oder Lamellenblech bezeichnet, angeordnet. Die Kopplung kann beispielsweise stoffschlüssig über Widerstandspunktschweißen oder auch über Löten erfolgen. Das Stromleiterblech selbst ist insbesondere aus einem Werkstoff ausgebildet, welcher sich ressistiv, also aufgrund von Widerstandsheizung, erwärmt. Die Wärme wird dann an die Finnenlage weitergegeben über Wärmeleitung. Die Finnenlage vergrößert die für die Wärmeübertragung zur Verfügung stehende Oberfläche vergrößert und gibt somit die Wärme an das vorbeiströmende Abgas weiter.

Alle Lamellenreihen sind ebenfalls entweder bevorzugt einstückig und werkstoffeinheitlich ausgebildet. Beispielsweise kann das Stromleitblech einstückig werkstoffeinheitlich, beispielsweise mäanderförmig, gebogen sein. An den jeweiligen Enden in dem Gehäuse ist dann ein Stromanschluss vorgesehen, so dass eine Spannung angelegt werden kann, so dass durch das eine Stromleiterblech ein Strom zu Erwärmung fließt.

Alternativ kann auch jede Lamellenreihe voneinander getrennt hergestellt, angeordnet sein. In diesem Fall ist dann eine jeweilige Lamellenreihe separat hergestellt. An den Enden einer jeden Lamellenreihe sind Kontaktelemente und/oder Abstandhalter angeordnet.

Das Kontaktelement selbst kann beispielsweise durch eine jeweilige Kontaktplatte ausgebildet sein. Die Kontaktplatte selbst sorgt für einen physischen Kontakt und damit gleichzeitig auch ein Abstandhalten. Die Kontaktplatte ist weiterhin jedoch aus einem elektrisch stromleitenden Werkstoff ausgebildet und dient somit gleichsam als physischer Abstandhalter und elektrischer Verbinder.

Alternativ können auch an den Enden die Stromleitbleche verlängert sein und dann eine jeweilige Lasche ausgebildet sein, wobei die Laschen von zwei voneinander nebeneinanderliegenden Stromleiterblechen gekoppelt werden, beispielsweise über ein stoffschlüssiges Koppeln. Somit werden zwei benachbarte Lamellenreihen elektrisch verbunden.

Wiederum alternativ können auch Spangenbleche, als beispielsweise in ihrem Querschnitt C-förmige Verbinder ausgebildet sein. Diese würden dann als drittes Bauteil zwischen zwei Lamellenreihen angeordnet sein und diese elektrisch miteinander verbinden.

Ergänzend können zwischen Lamellenreihen auch Abstandhalter ausgebildet sein. Diese sind bevorzugt dann aus einem elektrisch isolierten Material, beispielsweise aus Keramik ausgebildet. In einer bevorzugten Ausführungsvariante sind diese Abstandhalter ganz bis teilweise das Gehäuse durchgreifend mit diesen gekoppelt. Bevorzugt sind die Abstandhalter als Abstandplatten bzw. Keramikplatten ausgebildet. Diese stehen in dem Gehäuse in Horizontalrichtung zwischen zwei Lamellenreihen nach innen vor und halten hier einen physischen Abstand. Gleichzeitig durchgreifen die Keramikplatten teilweise das Gehäuse und weisen hier eine Öffnung auf, durch welche ein Haltemittel, beispielsweise ein Draht geführt ist. Der Draht ist dann mit der Außenseite des Gehäuses gekoppelt, so dass eine vereinfachte Montage möglich ist.

Ein weiterer wesentlicher Bestandteil der Erfindung sieht vor, dass die Längsachse in Abgasströmungsrichtung des Heizelementes in einem Winkel größer 1 Grad zur Längsachse des Katalysators angeordnet werden kann. Bevorzugt beträgt der Winkel größer 2, insbesondere 3 Grad, ganz besonders bevorzugt größer 5 Grad. Die Winkelanordnung sollte jedoch insgesamt kleiner 30 Grad ausgebildet sein. Dies wird dadurch erreicht, dass die Lamellenreihen in dem Gehäuse des Heizelementes von Haltestäben selbst angeordnet sind. Es kann somit auf Haltestifte zwischen Heizelement und nachgeschaltetem Katalysator gänzlich verzichtet werden, weshalb eine problemlose physische Entkopplung und auch beliebige geometrische Anordnung erfolgen kann. Auch ist es möglich, dass das Gehäuse selbst eine von dem Katalysator verschiedene Querschnittsgeometrie aufweist. Es können somit auch keramische Katalysatoren verwenden werden, denen ein Heizelement vorgeschaltet ist.

Damit die Lamellenreihen selbst in dem Gehäuse ortsfest lagefixiert angeordnet sind, ist ein Halteelement in dem Gehäuse vorgesehen. Das Halteelement durchgreift dazu die Lamellenreihen. Erfindungsgemäß ist das Halteelement als Haltestab ausgebildet. Besonders bevorzugt sind zwei Haltestäbe wiederum parallel voneinander beabstandet, in dem Gehäuse angeordnet. Die Lamellenreihen weisen hierzu beispielsweise eine jeweilige Lochung auf, durch welche die Haltestäbe greifen. Die Haltestäbe selbst können aus elektrisch isoliertem Werkstoff ausgebildet sein, beispielsweise aus einem Keramikwerkstoff. Auch ist es möglich, dass entsprechende Hülsen in den Lamellenreihen vorgesehen sind. Dies sind bevorzugt Keramikhülsen. Diese Hülsen weisen dann einen jeweiligen Abstand auf. Die Hülsen selbst sind dann bevorzugt von einem Haltestab durchgriffen, beispielsweise kann dies aus einem Stahlwerkstoff, insbesondere einem rostfreien Edelstahlwerkstoff ausgebildet sein.

Alternativ ist es auch möglich, dass jeweilige Abstandshülsen selbst ineinandergreifen und somit als modulares Stecksystem ausgebildet sind. Mehrere Hülsen bilden dann einen Haltestab aus.

Die Hülsen werden dann ineinandergesteckt und halten somit den Abstand der Parallelität der Lamellenreihen zueinander, gleichzeitig jedoch auch die Lamellenreihe ortsfest, insbesondere in Abgasströmungsrichtung ortsfest in dem Gehäuse. An den jeweiligen Enden kann dann eine Art Edelstahlniete oder Edelstahlhülse angesetzt sein, um die Abstandhalter mit dem Gehäuse zu koppeln, beispielsweise zu verschweißen.

Damit eine homogene Erwärmung über den gesamten Querschnitt erfolgt, ist weiterhin vorgesehen, dass die Lamellenreihen in ihrer Längsrichtung eine unterschiedliche Breite aufweisen. Die Breite ist erfindungsgemäß im Bereich des Haltestabes größer Durch den Haltestab bedingt, ist eine geringere Oberfläche in der Lamellenreihe selbst vorhanden, welche sich erwärmen kann. Im Bereich des Haltestabes wäre somit eine geringere Temperaturweitergabe an das Abgas damit verbunden. Durch die Tatsache, dass die Lamellenreihe hier in ihrer eigenen Breite größer ausgebildet ist, kann eine gleichgroße Fläche zur Wärmeübertragung bereitgestellt werden. Erfindungsgemäß ist der Stromleiterquerschnitt in der Lamellenreihe dadurch gleich ausgebildet. Im Ergebnis kann somit eine homogene Erwärmung des strömenden Abgases über die gesamte Querschnittsfläche erfolgen.

In einer weiteren bevorzugten Ausgestaltungsvariante ist in einem Endbereich einer jeweiligen Lamellenreihe in Relation zu einem Mittelbereich eine geringere Querschnittsfläche ausgebildet, insbesondere sind weniger Lamellen angeordnet. Der Mittelbereich erstreckt sich über einen Großteil der Länge des Lamellenbleches selber, bevorzugt über mehr als 50 %, insbesondere mehr als 60 %, und ganz besonders bevorzugt über 70 %, insbesondere mehr als 80 % und besonders bevorzugt mehr als 90 % der Länge des Lamellenbleches selber. Die verbleibenden 10 % oder weniger in einem jeweiligen Endbereich weisen jedoch dann im Vergleich zum Mittelbereich eine geringere, für die Wärmeübertragung zur Verfügung stehende Fläche auf. Hiermit kann ein Wärmestau im jeweiligen Randbereich des Gehäuses vermieden werden. Auch hierdurch ist es möglich, eine homogenere Erwärmung des strömenden Abgases über den gesamten Querschnitt zu erreichen.

Weitere Vorteile, Merkmale sind in den nachfolgenden Figuren beschrieben. Diese dienen dem einfachen Verständnis der Erfindung. Es zeigen:
- Figur 1: einen Teilausschnitt eines Abgasstranges,
- Figur 2: eine perspektivische Ansicht auf die erfindungsgemäße Heizvor'-richtung,
- Figur 3: eine vergrößerte Darstellung der Lamellenreihen in einer Teilschnittansicht,
- Figur 4 und 5: schematische Darstellungen unterschiedlicher Kopplungen der einzelnen Lamellenreihen,
- Figur 6: eine zweiteilige Darstellung der Lamellenreihen,
- Figur 7a: eine perspektivische Ansicht analog zur Figur 2,
- Figur 7b: eine Längsschnittansicht zur Figur 7a,
- Figur 8a und b: bevorzugte Ausgestaltungsvarianten der erfindungsgemäßen Heizvorrichtung,
- Figur 9: erfindungsgemäße Ausführungsvariante,
- Figur 10a bis d: Aufbau mit den Haltestäben,
- Figur 11a und b: unterschiedliche Haltestäbe
- Figur 12: Abstandhalter, befestigt an dem Gehäuse,
- Figur 13: zwei Haltestäbe aus Keramik und
- Figur 14: eine erfindungsgemäße Winkelanordnung von Heizelement und Katalysator zueinander.

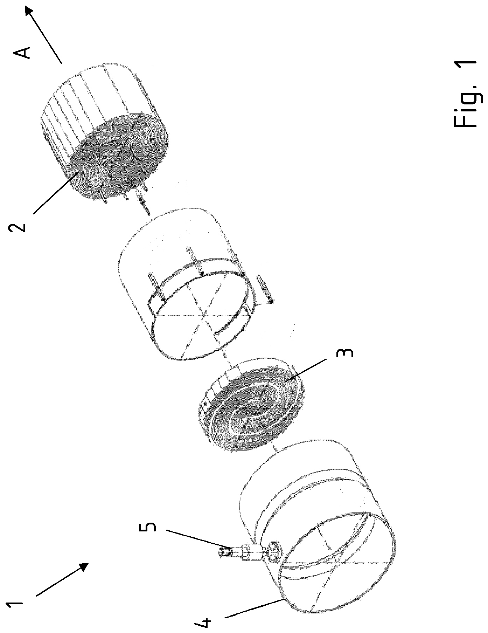

Figur 1 zeigt einen Teilausschnitt eines Abgasstranges in Explosivdarstellung. Hierbei ist eine Abgasnachbehandlungskomponente in Form eines Katalysators 2 dargestellt. In Abgasströmungsrichtung A ist dem Katalysator 2 vorgeschaltet eine Heizwendel in Form einer Heizvorrichtung 3. Diese ist mäanderförmig aufgewickelt, wie es aus dem Stand der Technik bekannt ist. Unter mäanderförmigen Verlauf ist im Rahmen dieser Erfindung ein mäanderförmiger Verlauf bzw. Zickzackverlauf zu verstehen.

Ferner ist ein äußeres Gehäuse 4 dargestellt, in welches die Heizwendel eingesetzt ist und dieses Gehäuse 4 weist einen elektrischen Anschluss 5 auf, um die Heizwendel mit einem elektrischen Strom zu beaufschlagen.

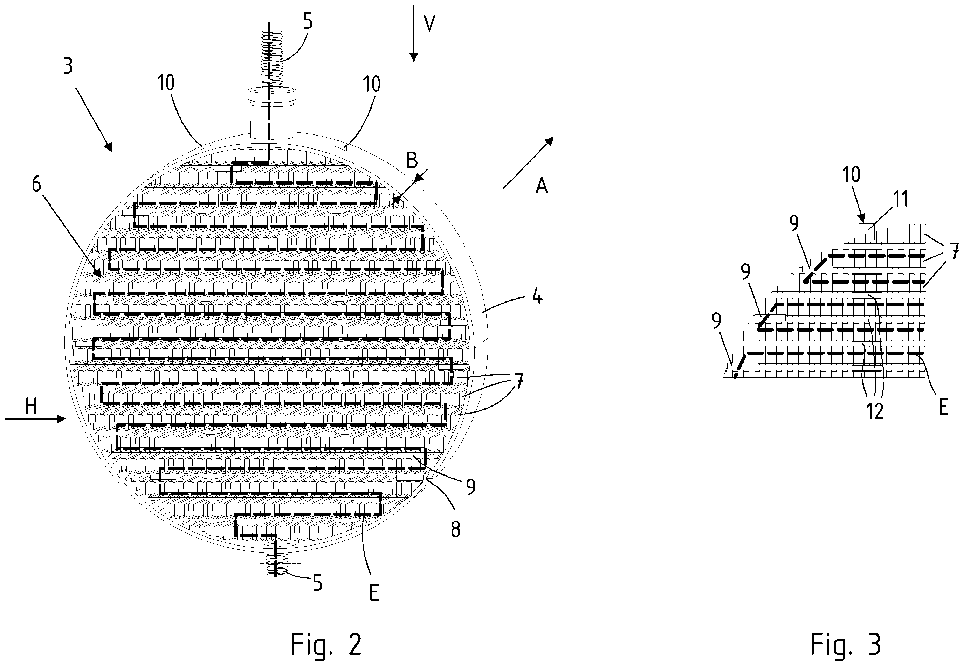

Figur 2 zeigt eine perspektivische Ansicht auf eine erfindungsgemäße Heizvorrichtung 3. Diese weist ein äußeres Gehäuse 4 auf. Das Gehäuse 4 ist ein radial umlaufender Blechmantel. Dieser kann in Abgasströmungsrichtung A eine geringe Breite B aufweisen. Das Gehäuse 4 kann jedoch auch deutlich länger in Abgasströmungsrichtung ausgebildet sein, als hier dargestellt. Ferner sind zwei elektrische Anschlüsse 5 vorgesehen, zur Beaufschlagung der in der Heizvorrichtung 3 angeordneten Lamellenstruktur 6 mit einem elektrischen Strom. Erfindungsgemäß sind in der Heizvorrichtung 3 einzelne Lamellenreihen 7 angeordnet. Die Lamellenreihen 7 sind bezogen auf eine hier dargestellte Horizontalrichtung H örtlich gesehen, parallel übereinander angeordnet.

Die einzelnen Lamellenreihen 7 sind nunmehr elektrisch in Reihe zueinander geschaltet, so dass sich der ebenfalls mit gestrichelter Linie dargestellte elektrische Stromdurchfluss E mäanderförmig ergibt. Hierzu sind in den jeweiligen Endbereichen 8 der Lamellenreihen 7 Kontaktplatten 9 angeordnet, was auch in der Figur 3 dargestellt ist, welche eine vergrößerte Darstellung der Lamellenreihen 7 in einer Teilschnittansicht darstellt. Die Kontaktplatten 9 sind jeweils nur zwischen jeder zweiten Lamellenreihe 7 angeordnet, so dass sich der mäanderförmige elektrische Stromdurchfluss E ergibt.

Damit die Lamellenreihen 7 selbst in dem Gehäuse 4 gehalten sind, ist ferner ein Halteelement in Form eines Haltestabes 10, in diesem Ausführungsbeispiel in Form von zwei Haltestäben 10 vorgesehen. Der Haltestab 10 erstreckt sich auf die Vertikalrichtung V bezogen durch alle Lamellenreihen 7und ist jeweils ober- und unterseitig, wie in Figur 2 dargestellt, mit dem Gehäuse 4 gekoppelt. In Abgasströmungsrichtung A sind somit die Lamellenreihen 7 lagefixiert angeordnet sowie zueinander parallel beabstandet.

Der Haltestab 10 kann, wie in Figur 3 dargestellt, aus einem metallischen inneren Stab 11 ausgebildet sein sowie beispielsweise keramischen Abstandshülsen 12, wobei jeder Lamellenreihe 7 eine Abstandshülse 12 selbst zugeordnet ist.

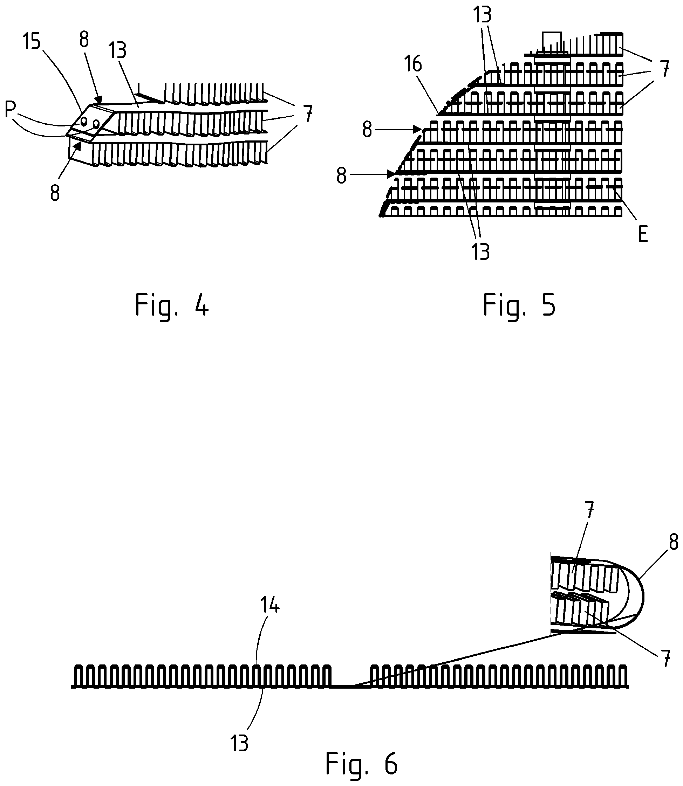

Gemäß Figur 4 und Figur 5 sind unterschiedliche Kopplungen der einzelnen Lamellenreihen 7 untereinander schematisch dargestellt. Die Lamellenreihen 7 selbst sind, wie in Figur 6 dargestellt, bevorzugt zweiteilig ausgebildet. Diese weisen ein Strom leitblech 13 auf sowie ein darauf angeordnetes Lamellenblech 14, auch Finnenblech genannt. Stromleitblech 13 und Lamellenblech 14 sind dann bevorzugt gekoppelt, beispielsweise stoffschlüssig über einen Lötvorgang oder ähnliches. Gemäß Ausführungsvariante von Figur 6 können zwei Lamellenreihen 7 in ihrem Endbereich 8 durch einen Biegevorgang umgebogen werden. Jede Lamellenreihe 7 kann auch separat voneinander hergestellt werden. Auch ist es, wie bereits in der Beschreibung erwähnt, möglich, dass alle Lamellenreihen 7 aus einem Stück hergestellt sind, welche dann biegetechnisch hergestellt sind und mäanderförmig verlaufen.

Gemäß Figur 4 sind die einzelnen Lamellenreihen 7 in ihrem jeweiligen Endbereich 8 über eine Kontaktlasche 15 miteinander gekoppelt. Dies bedeutet, dass das Stromleitblech 13 länger ausgebildet ist, umgebogen ist und beispielsweise über eine Punktschweißung P oder ähnliches miteinander gekoppelt ist.

Gemäß der Ausgestaltungsvariante von Figur 5 sind die Lamellenreihen 7 in ihren Endbereichen 8 über ein Spangenblech 16 miteinander gekoppelt. Dieses Spangenblech 16 selbst ist beispielsweise C-förmig ausgebildet. Das Spangenblech 16 verbindet dann in den Endbereichen 8 jeweils zwei Lamellenreihen 7 bzw. Stromleitbleche 13 miteinander, lässt jedoch immer eine Kopplung zwischendurch aus, so dass hier ebenfalls wieder ein mäanderförmiger elektrischer Stromdurchfluss E, mithin eine elektrische Reihenschaltung der Lamellenreihen 7 ergibt.

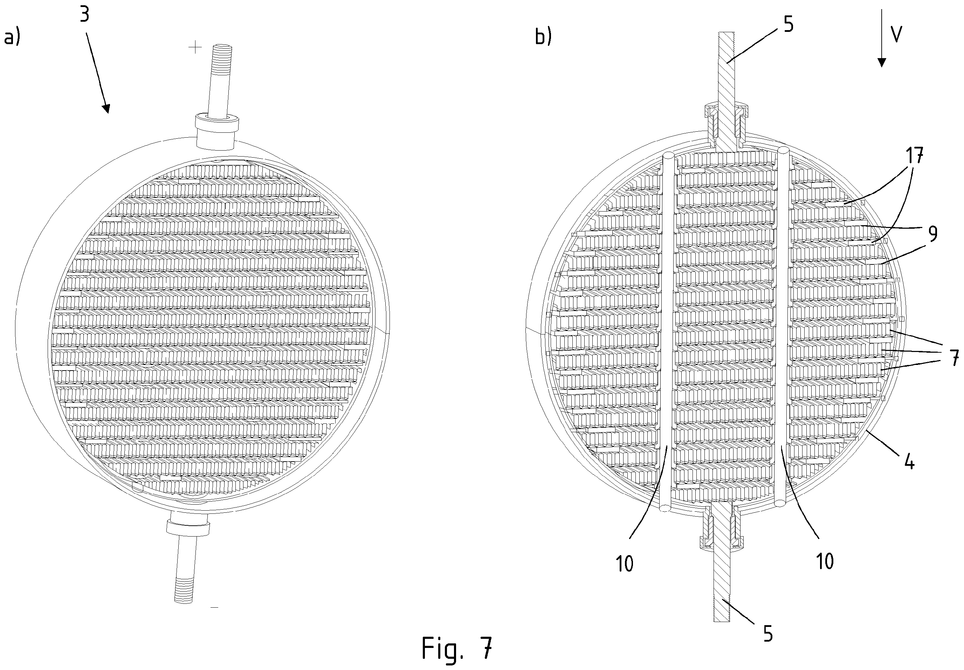

Figur 7a und b zeigt eine perspektivische Ansicht, gemäß Figur 7a analog zur Figur 2 nur ohne den eingezeichneten Stromdurchfluss. Figur 7b zeigt eine Längsschnittansicht durch Figur 7a. In der Längsschnittansicht ist insbesondere zu erkennen, dass die Haltestäbe 10 auf die Vertikalrichtung V bezogen, die einzelnen Lamellenreihen 7 zueinander durchgreifend lagefixiert anordnet. Ebenfalls ist zu erkennen, dass an den elektrischen Anschlüssen 5 eine elektrische Isolierung gegenüber dem Gehäuse 4 vorhanden, mithin ist der elektrische Anschluss 5 stromleitend mit der Lamellenstruktur verbunden, jedoch elektrisch isoliert von dem Gehäuse 4 angeordnet. In den jeweiligen Endbereichen sind zum einen die Kontaktplatten angeordnet. Dazwischen sind zusätzliche Abstandsplatten 17 angeordnet, jeweils zu jeder zweiten Lamellenreihe 7 eine zusätzliche Abstandsplatte 17 angeordnet. Die Abstandsplatte 17 ist bevorzugt aus keramischem Werkstoff hergestellt.

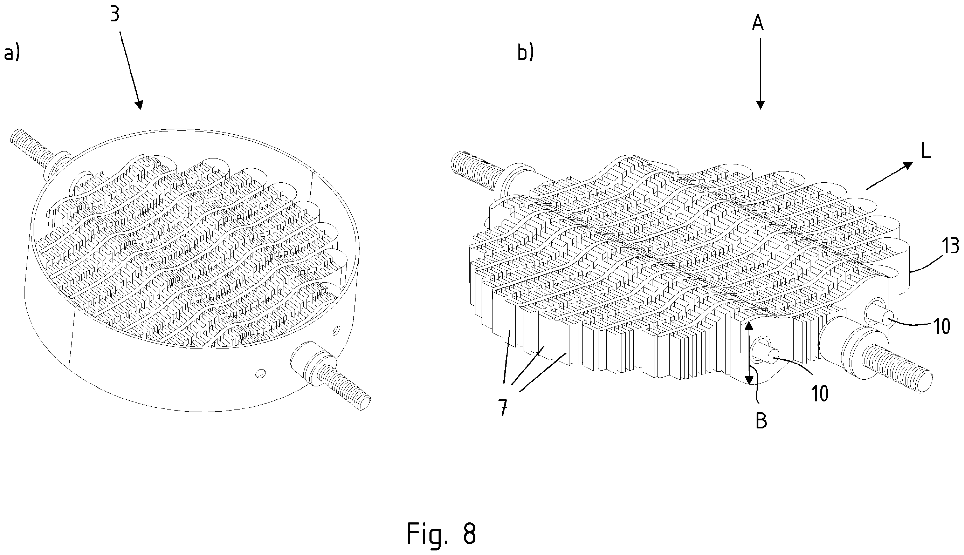

Figur 8a und b zeigen eine bevorzugte Ausgestaltungsvariante der erfindungsgemäßen Heizvorrichtung 3. Hierbei sind jeweilige Lamellenreihen 7 wiederum mäanderförmig miteinander verbunden, über ein durchgehendes Stromleitblech 13. Alternativ können auch die bereits in Figur 3, 4 und 5 angeordneten Verbindungen im Endbereich 8 zwischen zwei benachbarten Lamellenreihen 7 ausgeführt sein. Hierbei ist jedoch Breite B der Lamellenreihen 7, in der Abgasströmungsrichtung A gemessen, unterschiedlich ausgebildet. Dies bedeutet, in Längsrichtung L der Lamellenreihen 7 ändert sich die Breite B. Die Breite B selbst wird in Abgasströmungsrichtung A gemessen. Die Breite ist somit im Bereich der Haltestäbe 10 größer ausgebildet. Somit steht effektiv die gleiche Fläche, auch im Bereich der Haltestäbe 10 zur Verfügung, so dass in Abgasströmungsrichtung A über den gesamten Querschnitt der Erwärmungsvorrichtung 3 im Wesentlichen der gleiche Wärmeübergang zu verzeichnen ist und einen im Querschnitt gleichmäßig erwärmte Abgasströmung erzeugbar ist.

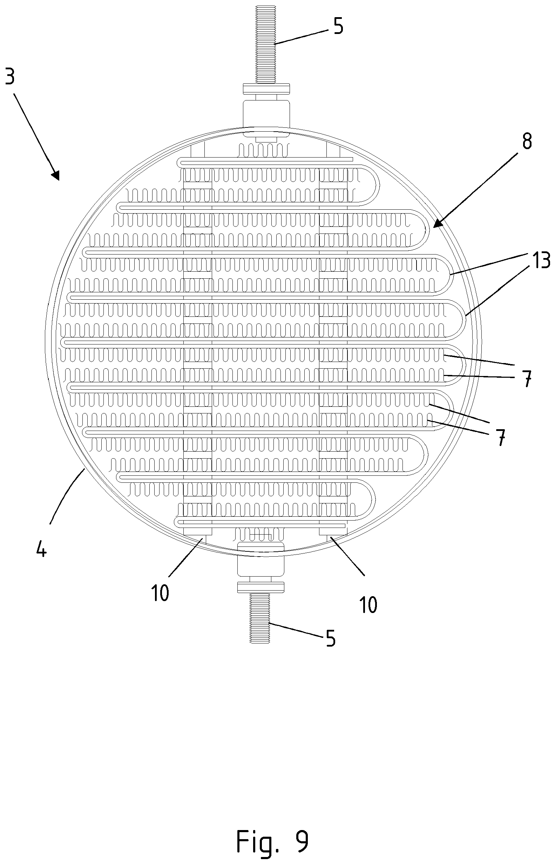

Figur 9 zeigt eine weitere erfindungsgemäße Ausführungsvariante. Hierbei wird auch ein durchgehendes Stromleitblech 13 einstückig gefalten bzw. gebogen. Es sind jeweils zwei Lamellenreihen 7 parallel aufeinander zu zeigend gerichtet, wobei darauffolgend wiederum zwei Lagen des Stromleitbleches 13 in einem Abstand zueinander angeordnet ist, jedoch ohne Lamellenreihe 7, wiederum gefolgt von zwei parallel zueinander angeordneten Lamellenreihen 7. Dies ermöglicht ein einfaches Herstellen während eines Biegevorganges, der in dem Gehäuse 4 angeordneten Lamellenstruktur. Wiederum ist dies gehalten durch die Haltestäbe 10 und angeschlossen an die elektrischen Anschlüsse 5.

Zumindest dargestellt auf der rechte Seite von Figur 9 ist somit die Lamellendichte im jeweiligen Endbereich 8 der Lamellenreihen 7 geringer ausgebildet. Eine evtl. turbulente Strömung und/oder Verdichtung der Strömung kann im Randbereich des Gehäuses 4 kann hier zu einer übermäßigen Erwärmung führen, was durch eine geringere Dichte der Lamellen im Endbereich 8 ausgeglichen bzw. vermieden werden kann.

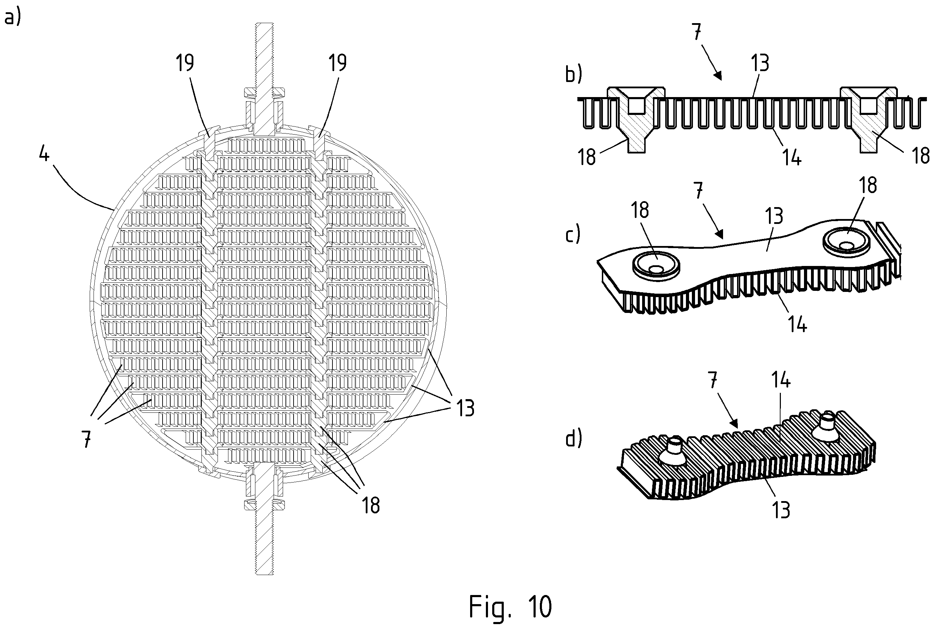

Figur 10a bis d zeigt den Aufbau mit den Haltestäben 10, wobei die Haltestäbe 10 hier nicht einstückig durchgehend ausgebildet sind, sondern durch jeweilige Steckhülsen 18. Eine jeweilige bevorzugte keramische Steckhülse 18 kann somit sowohl die jeweilige Lamellenreihe 7 formschlüssig lagefixieren als auch elektrisch voneinander isolieren. Die Steckhülse 18 kann somit als Abstandhalter und gleichzeitig auch elektrischer Isolator fungieren. An den Enden der Haltestäbe 10 kann beispielsweise eine metallische Hülse 19 angeordnet sein, um mit dem Gehäuse 4 gekoppelt zu werden. Auch diese Ausführungsvariante weist ein durchgehendes Stromleitblech 13 zwischen den Lamellenstrukturen auf. Dieses ist jedoch jeweils mäanderförmig angeordnet, so dass jeweils eine Lamellenreihe an dem Stromleitblech 13 parallel zur nächsten Lamellenreihe 7 angeordnet ist. Die Abstandshülsen 12 können somit während des Faltvorganges eingesetzt werden und werden durch die zueinander gebogenen Lamellenreihen 7 selbst gehalten. Die gesamte Struktur kann dann anschließend in das Gehäuse 4 eingesetzt werden und durch die Hülsen 19 formschlüssig lagefixiert werden.

Figur 10b, c und d zeigen eine jeweilige Längsschnittansicht, perspektivische Ober- und Unteransicht einer solchen Lamellenreihe 7. Die Lamellenreihe 7 weist ein Stromleitblech 13 sowie ein Lamellenblech 14 auf. Darin angesagt sind die Abstandshülsen 12 als keramische Hülsen, welche gleichzeitig eine elektrische Isolierung, aber auch eine formschlüssige Lagefixierung realisieren. Stromleitblech 13 und Lamellenblech 14 gemäß der gesamten Erfindung können aus Edelstahlwerkstoff ausgebildet sein, welcher bevorzugt eine Dicke bzw. Wandstärke von 0,1 bis 0,2, insbesondere 0,15 mm aufweist.

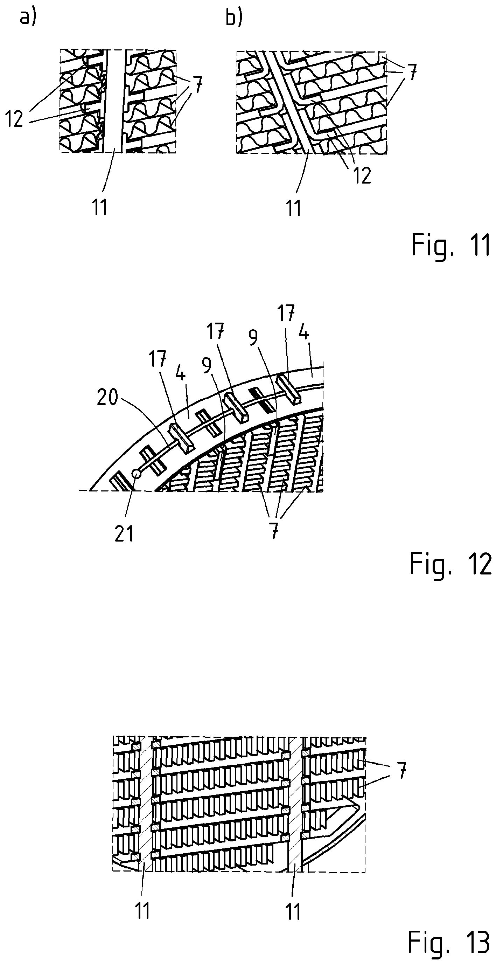

Figur 11a und b zeigen demgegenüber eine Ausführungsvariante, bei welcher ein jeweiliger Stab 11 die Lamellenreihen 7 einstückig durchgreifend ausgebildet ist. Hier sind jeweilige Abstandshülsen 12 als elektrische Isolatoren angeordnet, die die einzelnen Lamellenreihen 7 zueinander formschlüssig beabstanden und elektrisch isolieren.

Figur 12 zeigt eine weitere Ausgestaltungsvariante der vorliegenden Erfindung. Hierbei sind zu den jeweiligen Lamellenreihen 7 im Endbereich Kontaktplatten angeordnet, und zwar zwischen jeder zweiten Lamellenreihe 7. Ferner sind dann Abstandsplatten 17 als Keramikplatten jeweils auch zwischen jeder zweiten Lamellenreihe 7 angeordnet. Diese sind hier das Gehäuse 4 teilweise durchgreifend angeordnet und weisen ein Loch auf, so dass diese außenseitig des Gehäuses 4 durchgriffen sind und durch einen Schweißpunkt 21 fixiert gehalten sind. Die Abstandsplatten 17 können somit nachträglich in das Gehäuse 4 eingeführt werden und hier formschlüssig lagefixiert werden.

Figur 13 zeigt eine weitere Ausgestaltungsvariante der Erfindung. Hier ist der jeweilige Stab 11 als keramischer Stab ausgebildet, so dass die Lamellenreihen 7 formschlüssig in einem Abstand haltend, gleichzeitig jedoch aus elektrisch isolierend angeordnet ist. Das ganze Produkt kann separat hergestellt werden, mithin die Lamellenstruktur und dann in das Gehäuse eingesetzt werden. Auch kann eine Vormontage erfolgen und dann ein Gesamtverlöten des kompletten Aufbaus in einer Lötvorrichtung erfolgen.

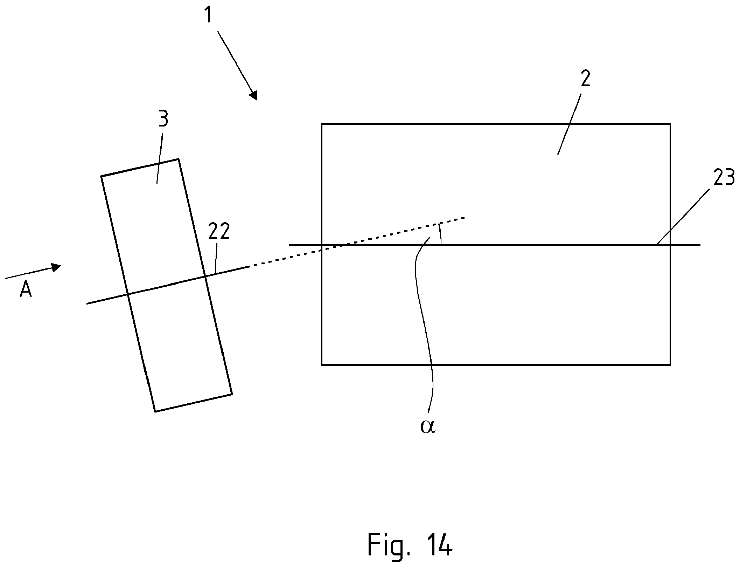

Figur 14 zeigt einen weiteren wesentlichen Vorteil der Erfindung, wonach eine Winkelanordnung geometrisch entkoppelt und beliebig im Rahmen dieser Erfindung möglich ist. Die Heizvorrichtung 3 kann hierzu mit ihrer Längsachse 22 in einem Winkel a größer 1 Grad zu einer Längsachse 23 des Katalysators 2 bzw. der Abgasnachbehandlungskomponente angeordnet werden. Es ergibt sich somit eine größere gestalterische Freiheit in dem Verlauf des Abgasstranges 1, beispielsweise im Unterflurbereich des Kraftfahrzeuges. Dies birgt beispielsweise Vorteile, um Bauraum für Achskomponentengetriebe, Komponenten oder einen Verbrennungsmotor optimal auszunutzen. Durch die physische Entkopplung von Heizvorrichtung 3 und Abgasnachbehandlungskomponente kann die Winkelanordnung frei gewählt werden so wie es in Figur 14 dargestellt ist.

### Bezugszeichen:

- 1 -: Abgasstrang
- 2 -: Katalysator
- 3 -: Heizvorrichtung bzw. Erwärmungsvorrichtung
- 4 -: Gehäuse
- 5 -: elektrischer Anschluss
- 6 -: Lamellenstruktur
- 7 -: Lamellenreihen
- 8 -: Endbereich zu 7
- 9 -: Kontaktplatte
- 10 -: Haltestab
- 11 -: Stab
- 12 -: Abstandshülse
- 13 -: Strom leitblech
- 14 -: Lamellenblech
- 15 -: Kontaktlasche
- 16 -: Spangenblech
- 17 -: Abstandsplatte
- 18 -: Steckhülse
- 19 -: Hülse
- 20 -: Draht
- 21 -: Schweißpunkt
- 22 -: Längsachse zu 3
- 23 -: Längsachse zu 2

- A -: Abgasströmungsrichtung
- H -: Horizontalrichtung
- V -: Vertikalrichtung
- E -: Elektrischer Stromfluss
- L -: Längsrichtung zu 7
- B -: Breite
- P -: Punktschweißung

## Patentansprüche

1. Elektrische Heizvorrichtung (3) für einen Abgasstrang (1) aufweisend ein außen umlaufendes, insbesondere rundes Gehäuse (4), wobei in dem Gehäuse (4) eine Lamellenstruktur angeordnet ist, welche durch Beaufschlagung mit einem elektrischen Strom erwärmbar ist, wobei die Lamellenstruktur durch Lamellenreihen (7) in dem Gehäuse (4) parallel zueinander angeordnet ist, wobei die parallel angeordneten Lamellenreihen (7) in Reihe oder parallel elektrisch geschaltet zueinander angeordnet sind wobei die Lamellenreihen (7) durch zwei Haltestäbe (10), welche die Lamellenreihen (7) durchgreifen in dem Gehäuse gehalten sind, wobei im Bereich der Haltestäbe (10) die Lamellenreihen (7) breiter ausgebildet sind, **dadurch gekennzeichnet, dass** der Stromleiterquerschnitt in der Lamellenreihe (7) gleich ausgebildet ist.

2. Elektrische Heizvorrichtung (3) nach Anspruch 1, **dadurch gekennzeichnet, dass** das Gehäuse (4) eine radial umlaufende Mantelfläche ist.

3. Elektrische Heizvorrichtung (3) nach einem der Ansprüche 1 oder 2, **dadurch gekennzeichnet, dass** die Lamellenreihen (7) durch einen durchgängigen Blechstreifen hergestellt und miteinander verbunden sind.

4. Elektrische Heizvorrichtung (3) nach einem der Ansprüche 1 bis 3, **dadurch gekennzeichnet, dass** die Lamellenreihen (7) separat hergestellt sind, wobei in einem jeweiligen Endbereich (8) ein Verbindungselement angeordnet ist, insbesondere ein elektrisch leitendes Verbindungselement.

5. Elektrische Heizvorrichtung (3) nach einem der Ansprüche 1 bis 4, **dadurch gekennzeichnet, dass** das Verbindungselement als Kontaktplatte (9) oder als Kontaktlasche (15) oder als Spangenblech (16) ausgebildet ist.

6. Elektrische Heizvorrichtung (3) nach einem der Ansprüche 1 bis 5, **dadurch gekennzeichnet, dass** in einem jeweiligen Endbereich (8) der Lamellenreihen(7) ein Abstandhalter angeordnet ist, insbesondere eine Keramikplatte.

7. Elektrische Heizvorrichtung (3) nach dem vorhergehenden Anspruch, **dadurch gekennzeichnet, dass** der Abstandhalter mit dem Gehäuse (4) gekoppelt ist, insbesondere durchgreift der Abstandhalter das Gehäuse (4) teilweise.

8. Elektrische Heizvorrichtung (3) nach einem der Ansprüche 1 bis 7, **dadurch gekennzeichnet, dass** die Haltestäbe (10) mehrteilig ausgebildet sind, insbesondere durch Steckhülsen (18).

9. Elektrische Heizvorrichtung (3) nach einem der Ansprüche 1 bis 8, **dadurch gekennzeichnet, dass** die Lamellenreihen (7) in sich jeweils zweiteilig ausgebildet sind, durch ein elektrisches Leiterblech (13) und ein damit gekoppeltes Lamellenblech (14).

10. Elektrische Heizvorrichtung (3) nach einem der Ansprüche 1 bis 9, **dadurch gekennzeichnet, dass** in den Endbereichen der Lamellenbleche (14) in Relation zu einem Mittelbereich weniger Lamellen angeordnet sind, wobei der Mittelbereich sich über einen Großteil der Länge des Lamellenbleches (14) erstreckt.

## Claims

1. Electric heating device (3) for an exhaust gas train (1), having an externally circumferential, in particular round, housing (4), wherein in the housing (4) a lamellar structure that can be heated by the application of an electric current is arranged, wherein the lamellar structure is arranged by rows of lamellae (7) disposed parallel to one another in the housing (4), wherein the rows of lamellae (7) arranged parallel to one another are arranged in electrical series or parallel connection, wherein the rows of lamellae (7) are held in the housing by two retaining rods (10) that extend through the rows of lamellae (7), wherein the rows of lamellae (7) are wider in the region of the retaining rods (10), **characterised in that** the current conductor cross-section in the row of lamellae (7) is uniform.

2. Electric heating device (3) according to claim 1, **characterised in that** the housing (4) is a radially circumferential jacket.

3. Electric heating device (3) according to claim 1 or 2, **characterised in that** the rows of lamellae (7) are formed from a continuous metal strip and are connected with each other.

4. Electric heating device (3) according to any one of claims 1 to 3, wherein the rows of lamellae (7) are manufactured separately,
wherein at a respective end region (8) a connection element is arranged, in particular an electrically conducting connection element.

5. Electric heating device (3) according to any one of claims 1 to 4, **characterised in that** the connection element is formed as a contact plate (9) or as a contact lug (15) or as a clamping plate (16).

6. Electric heating device (3) according to any one of claims 1 to 5, **characterised in that** a spacer, in particular a ceramic plate, is arranged at a respective end region (8) of the rows of lamellae (7).

7. Electric heating device (3) according to the preceding claim, **characterised in that** the spacer is coupled to the housing (4), in particular the spacer extends partially through the housing (4).

8. Electric heating device (3) according to any one of claims 1 to 7, **characterised in that** the retaining rods (10) are formed in several parts, in particular by push-in sleeves (18).

9. Electric heating device (3) according to any one of claims 1 to 8, **characterised in that** the rows of lamellae (7) are each formed in two parts, by an electric conductor plate (13) and a lamella plate (14) coupled thereto.

10. Electric heating device (3) according to any one of claims 1 to 9, **characterised in that** fewer lamellae are arranged in the end regions of the lamella plate (14) in relation to a central region, wherein the central region extends over a major part of the length of the lamella plate (14).

## Revendications

1. Dispositif de chauffage (3) électrique pour un brin de gaz d'échappement (1) présentant un boîtier (4) périphérique extérieur, en particulier rond, dans lequel une structure lamellaire est agencée dans le boîtier (4), laquelle peut être chauffée par un courant électrique, dans lequel la structure lamellaire est agencée parallèlement les unes par rapport aux autres par des rangées de lamelle (7) dans le boîtier (4), dans lequel les rangées de lamelle (7) agencées parallèlement sont agencées en circuit électrique en série ou en parallèle les unes par rapport aux autres, dans lequel les rangées de lamelle (7) sont maintenues par deux barres de retenue (10) qui traversent les rangées de lamelle (7), dans le boîtier, dans lequel dans la zone des barres de retenue (10), les rangées de lamelle (7) sont réalisées plus larges, **caractérisé en ce que** la section transversale de conducteur de courant est réalisée de manière identique dans la rangée de lamelle (7).

2. Dispositif de chauffage (3) électrique selon la revendication 1, **caractérisé en ce que** le boîtier (4) est une surface enveloppe périphérique radiale.

3. Dispositif de chauffage (3) électrique selon l'une quelconque des revendications 1 ou 2, **caractérisé en ce que** les rangées de lamelle (7) sont fabriquées et sont reliées entre elles par une bande de tôle continue.

4. Dispositif de chauffage (3) électrique selon l'une quelconque des revendications 1 à 3, **caractérisé en ce que** les rangées de lamelle (7) sont fabriquées séparément,
dans lequel un élément de liaison est agencé dans une zone d'extrémité (8) respective, en particulier un élément de liaison électroconducteur.

5. Dispositif de chauffage (3) électrique selon l'une quelconque des revendications 1 à 4, **caractérisé en ce que** l'élément de liaison est réalisé comme plaque de contact (9) ou comme languette de contact (15) ou comme tôle de barrette (16).

6. Dispositif de chauffage (3) électrique selon l'une quelconque des revendications 1 à 5, **caractérisé en ce que** dans une zone d'extrémité (8) respective des rangées de lamelle (7), un élément d'écartement est agencé, en particulier une plaque en céramique.

7. Dispositif de chauffage (3) électrique selon la revendication précédente, **caractérisé en ce que** l'élément d'écartement est couplé au boîtier (4), en particulier l'élément d'écartement traverse partiellement le boîtier (4).

8. Dispositif de chauffage (3) électrique selon l'une quelconque des revendications 1 à 7, **caractérisé en ce que** les barres de retenue (10) sont réalisées en plusieurs parties, en particulier par des douilles d'enfichage (18).

9. Dispositif de chauffage (3) électrique selon l'une quelconque des revendications 1 à 8, **caractérisé en ce que** les rangées de lamelle (7) sont réalisées en elles respectivement en deux parties, par une tôle conductrice électrique (13) et une tôle de lamelle (14) couplée à celle-ci.

10. Dispositif de chauffage (3) électrique selon l'une quelconque des revendications 1 à 9, **caractérisé en ce que** moins de lamelles sont agencées dans les zones d'extrémité des tôles de lamelle (14) en relation avec une zone médiane, dans lequel la zone médiane s'étend sur une grande partie de la longueur de la tôle de lamelle (14).
